# EUROPEAN PATENT APPLICATION

(11) **EP 4 769 437 A1**
(43) Date of publication of application: **01.07.2026**
(21) Application number: 23950600.9
(22) Date of filing: 25.08.2023
(51) Int. Cl.: G21C 15/00, G21C 15/16

(54) **GAS-WATER SEPARATOR AND BOILING-WATER NUCLEAR REACTOR**

(71) Applicant: Hitachi GE Vernova Nuclear Energy, Ltd., Hitachi-shi, Ibaraki 317-0073 (JP)
(72) Inventor: POVOLNY Antonin, Hitachi-shi, Ibaraki 317-0073 (JP); KATONO Kenichi, Hitachi-shi, Ibaraki 317-0073 (JP); ISHIDA Naoyuki, Tokyo 100-8280 (JP)
(74) Representative: MERH-IP Matias Erny Reichl Hoffmann Patentanwälte PartG mbB
(86) International application number: PCT/JP2023/030677
(87) International publication number: WO 2025/046645

(57) **Abstract**

Provided are a gas-water separator and a boiling-water nuclear reactor, which are capable of reducing pressure loss while maintaining gas-water separation performance of the gas-water separator. The gas-water separator separates a gas-liquid two-phase flow into steam (gas phase) containing moisture and water (liquid phase), the gas-liquid two-phase flow that is obtained by heating cooling water flowing into a core by a nuclear reaction of a fuel assembly, flows into the gas-water separator via a stand pipe, and then flows through the gas-water separator, and, in a swirler including a hub and a plurality of swirl vanes, a diameter of the hub at a position of 0.5 D or more and 2.0 D or less (D: hydraulic equivalent diameter) is set to be constant in an upstream direction from a surface of the hub on a downstream side of a flow of the gas-liquid two-phase flow.

## Description

### Technical Field

The present invention relates to a gas-water separator and a boiling-water nuclear reactor.

### Background Art

In a boiling-water nuclear reactor, a gas-water separator and other facilities, for example, a steam dryer are used to separate a mixed fluid (also referred to as a gas-liquid two-phase fluid) of hot water (water (liquid phase)) and steam (gas phase) at a core outlet into hot water (water (liquid phase)) and steam (gas phase). By reducing the pressure loss while maintaining the gas-water separation performance of the gas-water separator, it is possible to reduce the number of gas-water separators and the fuel cycle cost, and it is possible to contribute to the improvement of the stability of the core.

In the gas-water separator, a swirl vane is installed in a thin inlet inner cylinder called a stand pipe, or a first inner cylinder or a diffuser. A mixed fluid (gas-liquid two-phase fluid) of water (liquid phase) and steam (gas phase) passing through the gas-water separator by the swirl vane is rotated to generate a centrifugal force. On the downstream side of a gas-liquid two-phase flow of the swirl vane, steam (gas phase) and water (liquid phase) are separated by the centrifugal force, the water (liquid phase) is collected on the wall of the inner cylinder and separated by the pick-off ring, and a flow direction is changed toward an outlet of the water (liquid phase). That is, the flow of water (liquid phase) toward the downstream side of the gas-liquid two-phase flow is reversed to change the flow of water toward the upstream side. When the centrifugal force generated by the swirl vane is improved, the gas-water separation performance is improved, but there is a high possibility that the pressure loss is also increased. Conversely, when the pressure loss is reduced, the centrifugal force and the gas-water separation performance are likely to deteriorate. In order to reduce the pressure loss while maintaining the gas-water separation performance of the gas-water separator, adjustment to the shape characteristics of the gas-water separator is a problem.

For example, PTL 1 describes a gas-water separator in which a swirler including a hub and a plurality of swirl vanes is installed in a first-stage inner cylinder having a relatively low flow velocity to reduce a pressure loss, but since the separation performance is deteriorated, a component (collision plate) for improving the separation performance is provided at an upper outlet of the gas-water separator. In PTL 1, when the surface diameter on the hub downstream side is increased with respect to the hub constituting the swirler, the separation performance is improved. The pressure loss of the gas-water separator increases as the hub diameter increases. Since the pressure loss of the gas-water separator is affected not only by the surface diameter on the hub downstream side but also by the diameter on the upstream side, a gas-water separator having a small hub diameter on the upstream side and a large hub diameter on the downstream side is disclosed.

Further, PTLs 2 and 3 describe a gas-water separator that reduces the pressure loss while maintaining gas-water separation performance of the gas-water separator by changing a shape or an installation position of a swirler or extending a hub on a downstream side of the swirler.

### Citation List

### Patent Literature

PTL 1: JP 2000-153118 A
PTL 2: JP 2003-114293 A
PTL 3: JP 2012-154654 A

### Summary of Invention

### Technical Problem

However, in the gas-water separator described in PTL 1, it is necessary to provide the component (collision plate) for improving the separation performance at the upper outlet of the gas-water separator, and there is a concern that, although the pressure loss can be reduced, the gas-water separation performance cannot be maintained and may deteriorate.

In addition, in the gas-water separator described in PTLs 2 and 3, no consideration is given to changing the shape of the hub between the upstream surface and the downstream surface of the swirl vanes constituting the swirler.

Therefore, the present invention provides a gas-water separator and a boiling-water nuclear reactor, which are capable of reducing pressure loss while maintaining gas-water separation performance of the gas-water separator.

### Solution to Problem

In order to solve the above problems, a gas-water separator according to the present invention separates a gas-liquid two-phase flow into steam (gas phase) containing moisture and water (liquid phase), the gas-liquid two-phase flow that is obtained by heating cooling water flowing into a core by a nuclear reaction of a fuel assembly, flows into the gas-water separator via a stand pipe, and then flows through the gas-water separator, and, in a swirler including a hub and a plurality of swirl vanes, a diameter of the hub at a position of 0.5 D or more and 2.0 D or less (D: hydraulic equivalent diameter) is set to be constant in an upstream direction from a surface of the hub on a downstream side of a flow of the gas-liquid two-phase flow.

In addition, in a boiling-water nuclear reactor according to the present invention, a cylindrical core shroud is provided in a nuclear reactor pressure vessel, and a core loaded with a plurality of fuel assemblies is installed in the core shroud, a shroud head covering the core, a gas-water separator that is attached to the shroud head via a stand pipe and extends upward, and a steam dryer disposed above the gas-water separator are provided in the nuclear reactor pressure vessel, the gas-water separator includes a swirler having a hub and a plurality of swirl vanes, and in the swirler, a diameter of the hub at a position of 0.5 D or more and 2.0 D or less (D: hydraulic equivalent diameter) is set to be constant in an upstream direction from a surface of the hub on a downstream side of a flow of a gas-liquid two-phase flow.

### Advantageous Effects of Invention

According to the present invention, it is possible to provide a gas-water separator and a boiling-water nuclear reactor, which are capable of reducing pressure loss while maintaining gas-water separation performance of the gas-water separator.

Problems, configurations, and effects other than those described above will be clarified by the following description of embodiments.

### Brief Description of Drawings

[FIG. 1] FIG. 1 is a schematic configuration view of an advanced boiling-water nuclear reactor according to an embodiment of the present invention.
[FIG. 2] FIG. 2 is a view illustrating a gas-water separator according to Example 1 of the present invention in which a swirler is installed in a first-stage inner cylinder.
[FIG. 3] FIG. 3 is a view in which FIG. 2 is simplified and the swirler installed in the first-stage inner cylinder is clarified.
[FIG. 4] FIG. 4 is a longitudinal sectional view illustrating a shape of a hub that has a non-constant diameter gradient and constitutes the swirler according to Example 1 of the present invention.
[FIG. 5] FIG. 5 is a view illustrating a relationship between a length of a gas-liquid two-phase flow having a constant hydraulic equivalent diameter in an upstream direction from a hub downstream side surface and pressure loss performance.
[FIG. 6] FIG. 6 is a longitudinal sectional view illustrating a shape of a hub that has a constant diameter gradient and constitutes the swirler according to Example 1 of the present invention.
[FIG. 7] FIG. 7 is a view illustrating a gas-water separator according to Example 2 of the present invention in which a swirler is installed in a diffuser.
[FIG. 8] FIG. 8 is a view in which FIG. 7 is simplified and a swirler having a height similar to the diffuser is clarified.
[FIG. 9] FIG. 9 is a longitudinal sectional view illustrating a shape of a hub having a height similar to the swirler and the diffuser according to Example 2 of the present invention.
[FIG. 10] FIG. 10 is a simplified longitudinal sectional view illustrating a shape of a hub in which a swirler is installed over a diffuser and a part of a first-stage inner cylinder in a gas-water separator according to Example 3 of the present invention.
[FIG. 11] FIG. 11 is a longitudinal sectional view illustrating a shape of a hub in which a position where a diameter of the hub becomes first constant on a hub downstream side of a gas-liquid two-phase flow is inside the first-stage inner cylinder in the gas-water separator according to Example 3 of the present invention.
[FIG. 12] FIG. 12 is a longitudinal cross-sectional view illustrating a shape of a hub in which a position where a diameter of the hub becomes first constant on the hub downstream side of the gas-liquid two-phase flow matches a diffuser height in the gas-water separator according to Example 3 of the present invention.

### Description of Embodiments

In the present specification, a boiling-water nuclear reactor includes a normal boiling-water nuclear reactor (BWR) that includes a recirculation pump and circulates cooling water by causing the cooling water as a moderator to pass out of a nuclear reactor pressure vessel and to flow again into a downcomer in the nuclear reactor pressure vessel, an advanced boiling-water nuclear reactor (advanced boiling water reactor: ABWR) including an internal pump, a resource-renewable boiling-water nuclear reactor (resource-renewable boiling water reactor: RBWR), a highly economical and simplified boiling-water nuclear reactor (economic simplified boiling water reactor: ESBWR) that does not require the recirculation pump in the BWR and the internal pump in the ABWR by using a natural circulation system of cooling water by a chimney, a highly economical and compact light water reactor BWRX-300, and the like. Note that, hereinafter, an advanced boiling-water nuclear reactor (ABWR) that includes an internal pump and circulates a coolant in a nuclear reactor pressure vessel will be described as an example.

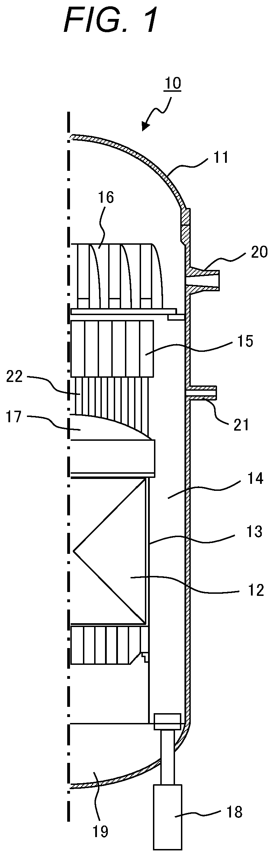

FIG. 1 is a schematic configuration view of an advanced boiling-water nuclear reactor according to an embodiment of the present invention.

As illustrated in FIG. 1, in an advanced boiling-water nuclear reactor 10 including a gas-water separator according to an embodiment of the present invention, a cylindrical core shroud 13 is provided in a nuclear reactor pressure vessel 11, and a core 12 that is an initial loading core loaded with a plurality of fuel assemblies (not illustrated) is installed in the core shroud 13. In addition, in the nuclear reactor pressure vessel 11, a shroud head 20 that covers the core 12, a gas-water separator 15 (described later in detail) that is attached to a shroud head 17 via a stand pipe 22 and extends upward, and a steam dryer 16 disposed above the gas-water separator 15 are provided.

An upper grid plate (not illustrated) is disposed within the core shroud 13 below the shroud head 17 and is attached to the core shroud 13 and located at an upper end portion of the core 12. A core support plate (not illustrated) is located at a lower end portion of the core 12, disposed in the core shroud 13, and installed in the core shroud 13. Further, a plurality of fuel support fittings (not illustrated) are installed on the core support plate (not illustrated).

In addition, in the nuclear reactor pressure vessel 11, a control rod guide pipe (not illustrated) that enables insertion of a plurality of control rods (not illustrated) having a cross-shaped cross section into the core 12 in order to control the nuclear reaction of the fuel assembly is provided. A control rod drive mechanism (not illustrated) is provided in a control rod drive mechanism housing (not illustrated) installed below a bottom portion of the nuclear reactor pressure vessel 11, and the control rod is joined to the control rod drive mechanism (not illustrated).

A plurality of internal pumps 18 are installed in a lower mirror 19 which is the bottom portion of the nuclear reactor pressure vessel 11 to penetrate into the nuclear reactor pressure vessel 11 from below. The plurality of the internal pumps 18 are disposed to be annularly spaced apart from each other at a predetermined interval outside the outermost peripheral portion of the plurality of control rod guide pipes (not illustrated). As a result, the internal pump 18 does not interfere with the control rod guide pipe (not illustrated) or the like. An impeller of each internal pump 18 is positioned in an annular downcomer 14 formed between the cylindrical core shroud 13 and the inner surface of the nuclear reactor pressure vessel 11. Cooling water in the nuclear reactor pressure vessel 11 is supplied from the lower mirror 19 side to the core 12 via the downcomer 14 by the impeller of each internal pump 18. The cooling water flowing into the core 12 is heated by the nuclear reaction of a fuel assembly (not illustrated) to form a gas-liquid two-phase flow, and flows into the gas-water separator 15 via the stand pipe 22. The gas-liquid two-phase flow passing through the gas-water separator 15 is separated into steam (gas phase) containing moisture and water (liquid phase), and the liquid phase falls down to the downcomer 14 again as cooling water. On the other hand, after the steam (gas phase) is introduced into the steam dryer 16, and the moisture is removed, the steam is supplied to a turbine (not illustrated) through a main steam piping 20. Cooling water flowing into the nuclear reactor pressure vessel 11 from a water feeding piping 21 via a condenser or the like passes (drops) downward in the downcomer 14. As described above, the internal pump 18 forcibly circulates the cooling water to the core 12 in order to efficiently cool heat generated in the core 12.

Examples of the present invention, particularly, the gas-water separator 15 will be described in detail with reference to the drawings.

The drawings are only schematically illustrated to the extent that the present invention can be sufficiently understood. Therefore, the present invention is not limited only to the illustrated examples. In addition, in the drawings, the same reference signs are given to common components and similar components, and redundant description thereof will be omitted.

### Example 1

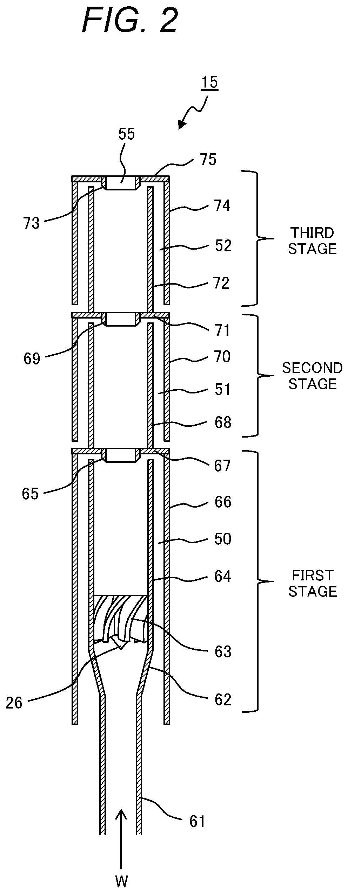

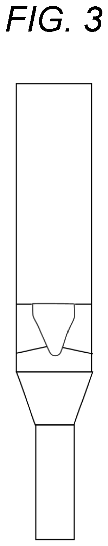

FIG. 2 is a view illustrating a gas-water separator according to Example 1 of the present invention in which a swirler is installed in a first-stage inner cylinder, and FIG. 3 is a view in which FIG. 2 is simplified and the swirler installed in the first-stage inner cylinder is clarified.

As illustrated in FIG. 2, the gas-water separator 15 according to the present example includes a diffuser 62, a swirler 63, a first-stage inner cylinder 64, a first-stage outer cylinder 66, a first-stage pick-off ring 65, a first-stage annular plate 67, a second-stage inner cylinder 68, a second-stage outer cylinder 70, a second-stage pick-off ring 69, a second-stage annular plate 71, a third-stage inner cylinder 72, a third-stage outer cylinder 74, a third-stage pick-off ring 73, and a third-stage annular plate 75 along a flow direction of a mixed fluid (gas-liquid two-phase fluid) of water (liquid phase) and steam (gas phase).

In the example illustrated in FIG. 2, the swirler 63 including a hub 26 and a plurality of swirl vanes is installed in the first-stage inner cylinder 64.

The mixed fluid (gas-liquid two-phase fluid) of water (liquid phase) and steam (gas phase) flows into the diffuser 62 through the stand pipe 61, and the flow velocity of the mixed fluid (gas-liquid two-phase fluid) is reduced by expansion of a flow path area by the diffuser 62. Thereafter, a centrifugal force is applied by the swirler 63 installed in the first-stage inner cylinder 64, and the mixed fluid is separated into steam (gas phase) containing droplets and water (liquid phase) in the first-stage inner cylinder 64. A part of the separated water (liquid phase) is separated by the first-stage pick-off ring 65 and the first-stage annular plate 67, and flows down in a first-stage drain flow path 50 formed between the first-stage inner cylinder 64 and the first-stage outer cylinder 66 by gravity to be drained.

Water (liquid phase) passing through the first-stage pick-off ring 65 flows into the second-stage inner cylinder 68, is separated by the second-stage pick-off ring 69 and the second-stage annular plate 71, flows down in a second-stage drain flow path 51 formed between the second-stage inner cylinder 68 and the second-stage outer cylinder 70 by gravity, and further flows down along the outer surface of the first-stage outer cylinder 66. On the other hand, the steam (gas phase) rises outside the gas-water separator 15.

Water (liquid phase) passing through the second-stage pick-off ring 69 flows into the third-stage inner cylinder 72, is separated by the third-stage pick-off ring 73 and the third-stage annular plate 75, and flows down in a third-stage drain flow path 52 formed between the third-stage inner cylinder 72 and the third-stage outer cylinder 74 by gravity to be drained. On the other hand, the steam (gas phase) rises outside the gas-water separator 15. Note that slight water (liquid phase) flowing out of a gas-water separator outlet 55 flows into the steam dryer 16.

Here, FIG. 3 is a view in which FIG. 2 is simplified and the swirler installed in the first-stage inner cylinder is clarified. As illustrated in FIG. 3, the present example is characterized by the shape of the hub 26 constituting the swirler 63.

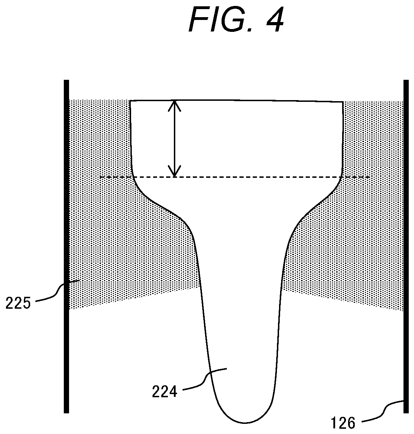

FIG. 4 is a longitudinal sectional view illustrating a shape of a hub that has a non-constant diameter gradient and constitutes the swirler according to the present example. As illustrated in FIG. 4, the swirler 63 includes a hub 224 and a plurality of swirl vanes 225, and is installed in the first-stage inner cylinder 126. The diameter of the hub 224 is gradually increased according to the flow direction of a mixed fluid (gas-liquid two-phase fluid) of water (liquid phase) and steam (gas phase).

In addition, the diameter of the hub 224 is constant in the upstream direction (the position indicated by the dotted line) from the surface on the downstream side of the flow of the mixed fluid (gas-liquid two-phase fluid). Here, the distance (length) along the flow direction of the mixed fluid (gas-liquid two-phase fluid) in which the diameter of the hub 224 is constant, from the surface on the downstream side of the flow of the mixed fluid (gas-liquid two-phase fluid) in the upstream direction is from half to twice the hydraulic equivalent diameter D. In other words, the hub 224 has technical significance in that the diameter of the hub 224 at a position of 0.5 D or more and 2.0 D or less (D: hydraulic equivalent diameter) in the upstream direction from the surface on the downstream side of the flow of the mixed fluid (gas-liquid two-phase fluid) is set to be constant. This point will be described below.

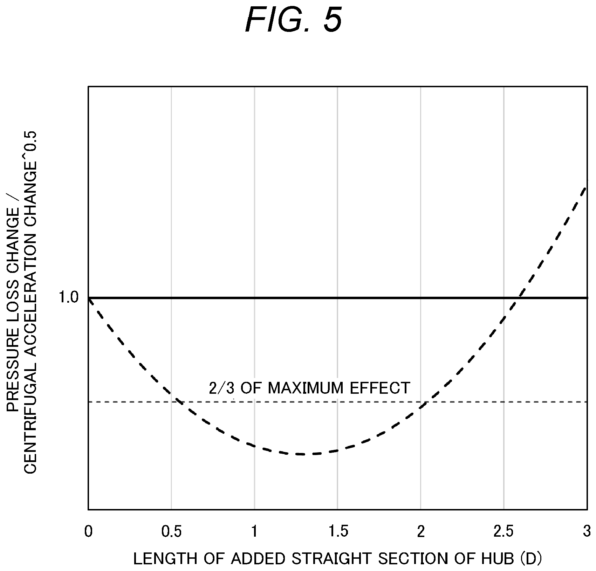

FIG. 5 is a view illustrating a relationship between the length of the gas-liquid two-phase flow having a constant hydraulic equivalent diameter in the upstream direction from the hub downstream side surface and pressure loss performance. In FIG. 5, the horizontal axis represents the length (distance) with a constant hydraulic equivalent diameter in the upstream direction from the hub downstream side surface of the gas-liquid two-phase flow, and the vertical axis represents a calculation result of combined performance (X) = pressure loss (X)/swirling force^{0·5} (X) in order to simultaneously evaluate the gas-water separation performance and the pressure loss performance. First, the gas-water separation performance and the pressure loss performance were evaluated by three-dimensional numerical dynamics analysis (computational fluid dynamics: CFD). The distance (length) at which the hub diameter is constant in the upstream direction from the hub downstream side surface of the flow of the mixed fluid (gas-liquid two-phase fluid) is defined as X. The pressure loss performance when X was changed was evaluated by CFD and fitted with a quadratic polynomial. In addition, the swirling force of the gas-liquid two-phase flow associated with the gas-water separation performance when X was changed was also evaluated by CFD, and fitted by a second-order polynomial. Since the flow rate of water at the outlet of the swirler is proportional to the 0.5 power of the swirling force, in order to simultaneously evaluate the gas-water separation performance and the pressure loss performance, the combined performance (X) = pressure loss (X)/swirling force^{0·5} (X) was calculated and visualized as illustrated in FIG. 5. When the pressure loss is reduced, the combined performance (X) is reduced. In addition, when the swirling force, that is, the gas-water separation performance and the pressure loss performance are improved, the combined performance (X) decreases.

In FIG. 5, in the case of about 1.3 D, since the combined performance (X) is the smallest, the gas-water separation performance and the pressure loss performance are the best. Further, since the improvement in the combined performance (X) is within 1/3 of the best performance in the range of 0.5 D or more and 2.0 D or less, it was confirmed that there is a technical significance in making the diameter of the hub 224 constant in the range of 0.5 D or more and 2.0 D or less.

Returning to FIG. 4, the increase rate of the diameter of the hub 224 is not constant on the upstream side from the part where the diameter of the hub 224 along the flow direction of the gas-liquid two-phase flow becomes constant (dotted line part), as illustrated in FIG. 4. In other words, the diameter of the hub 224 along the flow direction of the gas-liquid two-phase flow gradually increases from the most upstream side toward the downstream side. However, the increase rate rapidly increases (non-linear) in the vicinity of the upstream side of the part (dotted line portion) where the diameter of the hub 224 becomes constant.

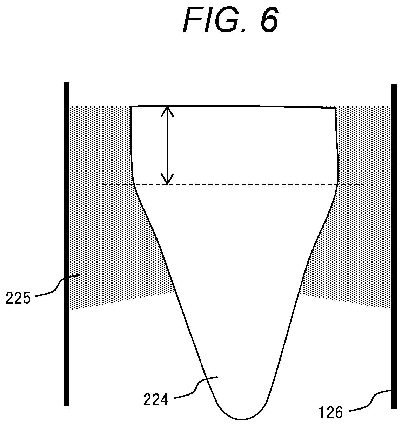

FIG. 6 is a longitudinal sectional view illustrating the shape of the hub that has a constant diameter gradient and constitutes the swirler according to the present example. As illustrated in FIG. 6, on the upstream side from the part (dotted line part) where the diameter becomes constant, the diameter of the hub 224 along the flow direction of the gas-liquid two-phase flow continuously increases, and the increase rate of the diameter of the hub 224 is constant. In other words, the diameter of the hub 224 along the flow direction of the gas-liquid two-phase flow continuously increases from the most upstream side toward the downstream side. The increase rate is constant (has linearity) up to the part where the diameter of the hub 224 becomes constant (dotted line part).

As described above, according to the present example, it is possible to provide a gas-water separator and a boiling-water nuclear reactor, which are capable of reducing pressure loss while maintaining gas-water separation performance of the gas-water separator.

### Example 2

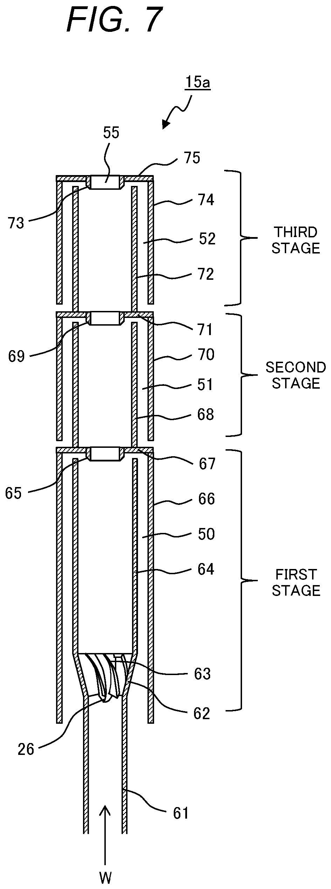

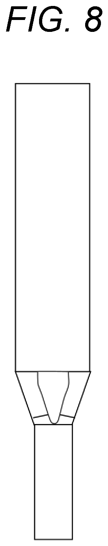

FIG. 7 is a view illustrating a gas-water separator according to Example 2 of the present invention in which a swirler is installed in a diffuser, and FIG. 8 is a view in which FIG. 7 is simplified and the swirler having a height similar to the diffuser is clarified. The present example is different from Example 1 in that Example 1 described above has a configuration in which the swirler is installed in the first-stage inner cylinder 64, but, in the present example, the swirler is installed in the diffuser.

As illustrated in FIGS. 7 and 8, a mixed fluid (gas-liquid two-phase fluid) of water (liquid phase) and steam (gas phase) flows into the diffuser 62 through the stand pipe 61, and the flow velocity of the mixed fluid (gas-liquid two-phase fluid) is reduced by expansion of a flow path area by the diffuser 62, and thereafter, a centrifugal force is applied by the swirler 63 installed in the diffuser 62, and the mixed fluid is separated into steam (gas phase) containing droplets and water (liquid phase) in the diffuser 62. Since other configurations are similar to those of FIG. 2 described in Example 1 described above, the description thereof will be omitted.

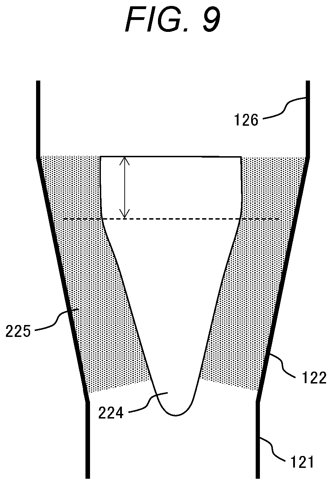

FIG. 9 is a longitudinal sectional view illustrating a shape of a hub having a height similar to the swirler and the diffuser according to Example 2 of the present invention. As illustrated in FIG. 9, a swirler includes a hub 224 and a plurality of swirl vanes 225, and is installed in a diffuser 122.

As illustrated in FIG. 9, the diameter of the hub 224 along the flow direction of the gas-liquid two-phase flow continuously increases from the most upstream side toward the downstream side. The increase rate is constant (has linearity) up to the part where the diameter of the hub 224 becomes constant (dotted line part). Note that the diameter of the hub 224 is constant in the upstream direction (the position indicated by the dotted line). Here, as in Example 1, in the hub 224, the diameter of the hub 224 at a position of 0.5 D or more and 2.0 D or less (D: hydraulic equivalent diameter) in the upstream direction from the surface on the downstream side of the flow of the gas-liquid two-phase flow is set to be constant.

As described above, according to the present example, it is possible to achieve the same effects as those of Example 1.

### Example 3

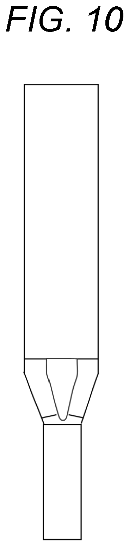

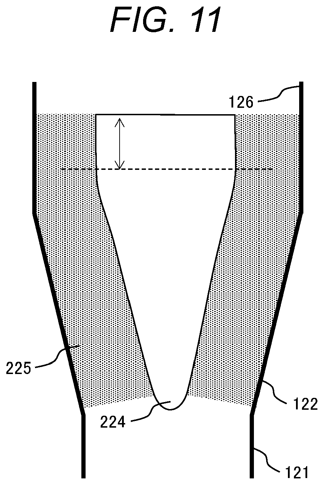

FIG. 10 is a simple longitudinal sectional view illustrating a shape of a hub in which a swirler is installed over a diffuser and a part of a first-stage inner cylinder in a gas-water separator according to Example 3 of the present invention, and FIG. 11 is a longitudinal sectional view illustrating the shape of the hub in which a position where the diameter of the hub is first constant on a hub downstream side of the gas-liquid two-phase flow is in the first-stage inner cylinder in the gas-water separator according to Example 3 of the present invention. The present example is different from Example 1 in that Example 1 described above has a configuration in which the swirler is installed in the first-stage inner cylinder 64, but, in the present example, the swirler is installed over the diffuser and a part of the first-stage inner cylinder.

As illustrated in FIGS. 10 and 11, the upstream surface of the gas-liquid two-phase flow of the swirler including the hub 224 and the plurality of swirl vanes 225 is installed in the diffuser 122, but the downstream side surface of the swirler is installed in the first-stage inner cylinder 126. In other words, the swirler according to the present example is installed over the diffuser 122 and a part of the first-stage inner cylinder 126.

As in Examples 1 and 2 described above, the diameter of the hub 224 along the flow direction of the gas-liquid two-phase flow continuously increases from the most upstream side toward the downstream side. The increase rate is constant (has linearity) up to the part where the diameter of the hub 224 becomes constant (dotted line part). Note that the diameter of the hub 224 is constant in the first-stage inner cylinder 126 (the position indicated by the dotted line) in the upstream direction. Here, as in Example 1, in the hub 224, the diameter of the hub 224 at a position of 0.5 D or more and 2.0 D or less (D: hydraulic equivalent diameter) in the upstream direction from the surface on the downstream side of the flow of the gas-liquid two-phase flow is set to be constant.

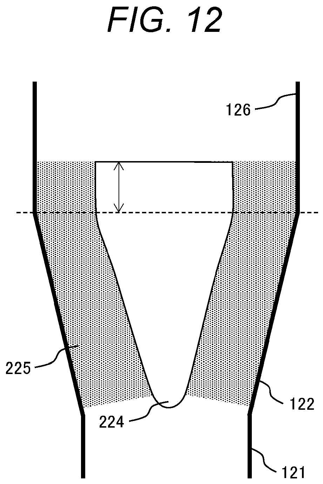

In addition, FIG. 12 is a longitudinal cross-sectional view illustrating the shape of the hub in which a position where the diameter of the hub becomes first constant on the hub downstream side of the gas-liquid two-phase flow matches the height of the diffuser in the gas-water separator according to the present example of the present invention. As illustrated in FIG. 12, the diameter of the hub 224 along the flow direction of the gas-liquid two-phase flow continuously increases from the most upstream side toward the downstream side up to the boundary between the diffuser 122 and the first-stage inner cylinder 126. The increase rate is constant (has linearity) up to a part where the diameter of the hub 224 becomes constant (dotted line part: boundary between the diffuser 122 and the first-stage inner cylinder 126).

As described above, according to the present example, it is possible to achieve the same effects as those of Example 1.

Note that the present invention is not limited to the above-described examples, and includes various modifications. For example, the above-described examples have been described in detail in order to describe the present invention in an easy-to-understand manner, and the present invention is not necessarily limited to a case having all the configurations described above. In addition, a part of the configuration of a certain example can be replaced with the configuration of another example, and the configuration of another example can be added to the configuration of a certain example. Reference Signs List

10 advanced boiling-water nuclear reactor
11 nuclear reactor pressure vessel
12 core
13 core shroud
14 downcomer
15, 15a gas-water separator
16 steam dryer
17 shroud head
18 internal pump
19 lower mirror
20 main steam piping
21 water feeding piping
22, 61, 121 stand pipe
26, 124, 224 hub
50 first-stage drain flow path
51 second-stage drain flow path
52 third-stage drain flow path
55 gas-water separator outlet
62, 122 diffuser
63, 123 swirler
64, 126 first-stage inner cylinder
65 first-stage pick-off ring
66 first-stage outer cylinder
67 first-stage annular plate
68 second-stage inner cylinder
69 second-stage pick-off ring
70 second-stage outer cylinder
71 second-stage annular plate
72 third-stage inner cylinder
73 third-stage pick-off ring
74 third-stage outer cylinder
75 third-stage annular plate
125, 225 swirl vane

## Claims

1. A gas-water separator that separates a gas-liquid two-phase flow into steam (gas phase) containing moisture and water (liquid phase), the gas-liquid two-phase flow that is obtained by heating cooling water flowing into a core by a nuclear reaction of a fuel assembly, flows into the gas-water separator via a stand pipe, and then flows through the gas-water separator, wherein
in a swirler including a hub and a plurality of swirl vanes, a diameter of the hub at a position of 0.5 D or more and 2.0 D or less (D: hydraulic equivalent diameter) is set to be constant in an upstream direction from a surface of the hub on a downstream side of a flow of the gas-liquid two-phase flow.

2. The gas-water separator according to claim 1, wherein
a diameter of the hub along the flow of the gas-liquid two-phase flow gradually or continuously increases from the most upstream side toward the downstream side up to a part where the diameter of the hub becomes constant.

3. The gas-water separator according to claim 2, wherein
the diameter of the hub along the flow of the gas-liquid two-phase flow gradually increases from the most upstream side toward the downstream side up to the part where the diameter of the hub becomes constant, and
an increase rate of the diameter of the hub rapidly increases on an upstream side of the part where the diameter of the hub becomes constant.

4. The gas-water separator according to claim 2, wherein
the diameter of the hub along the flow of the gas-liquid two-phase flow continuously increases from the most upstream side toward the downstream side up to the part where the diameter of the hub becomes constant, and
an increase rate of the diameter of the hub is constant up to the part where the diameter of the hub becomes constant.

5. The gas-water separator according to claim 4, wherein
the swirler is installed in a first-stage inner cylinder or a diffuser.

6. The gas-water separator according to claim 4, wherein
the swirler is installed over a diffuser and a part of the first-stage inner cylinder.

7. The gas-water separator according to claim 6, wherein
a diameter of the hub along a flow direction of the gas-liquid two-phase flow continuously increases from the most upstream side toward the downstream side up to a boundary between the diffuser and the first-stage inner cylinder.

8. A boiling-water nuclear reactor wherein
a cylindrical core shroud is provided in a nuclear reactor pressure vessel, and a core loaded with a plurality of fuel assemblies is installed in the core shroud,
a shroud head covering the core, a gas-water separator that is attached to the shroud head via a stand pipe and extends upward, and a steam dryer disposed above the gas-water separator are provided in the nuclear reactor pressure vessel,
the gas-water separator includes a swirler having a hub and a plurality of swirl vanes, and
in the swirler, a diameter of the hub at a position of 0.5 D or more and 2.0 D or less (D: hydraulic equivalent diameter) is set to be constant in an upstream direction from a surface of the hub on a downstream side of a flow of a gas-liquid two-phase flow.

9. The boiling-water nuclear reactor according to claim 8, wherein
a diameter of the hub along the flow of the gas-liquid two-phase flow gradually or continuously increases from the most upstream side toward the downstream side up to a part where the diameter of the hub becomes constant.

10. The boiling-water nuclear reactor according to claim 9, wherein
the diameter of the hub along the flow of the gas-liquid two-phase flow gradually increases from the most upstream side toward the downstream side up to the part where the diameter of the hub becomes constant, and
an increase rate of the diameter of the hub rapidly increases on an upstream side of the part where the diameter of the hub becomes constant.

11. The boiling-water nuclear reactor according to claim 9, wherein
the diameter of the hub along the flow of the gas-liquid two-phase flow continuously increases from the most upstream side toward the downstream side up to the part where the diameter of the hub becomes constant, and
an increase rate of the diameter of the hub is constant up to the part where the diameter of the hub becomes constant.

12. The boiling-water nuclear reactor according to claim 11, wherein
the swirler is installed in a first-stage inner cylinder or a diffuser.

13. The boiling-water nuclear reactor according to claim 11, wherein
the swirler is installed over the diffuser and a part of the first-stage inner cylinder.

14. The boiling-water nuclear reactor according to claim 13, wherein
a diameter of the hub along a flow direction of the gas-liquid two-phase flow continuously increases from the most upstream side toward the downstream side up to a boundary between the diffuser and the first-stage inner cylinder.
